# FASCICULE DE BREVET EUROPEEN

(11) **EP 3 520 008 B1**
(45) Date de publication et mention de la délivrance du brevet: **17.09.2025**
(21) Numéro de dépôt: 17787493.0
(22) Date de dépôt: 28.09.2017
(51) Int. Cl.: G06F 21/34, G06Q 20/42, G06F 21/44, H04L 9/40, G06Q 20/38

(54) **CONTROLE DE DELEGATION DE DROITS**
STELLVERTRETERREGELUNG UND RECHTE
RIGHTS DELEGATION TO A DEPUTY

(30) Priorité: 30.09.2016 FR 1659437
(43) Date de publication de la demande: 07.08.2019
(73) Titulaire: Orange, 92130 Issy-les-Moulineaux (FR)
(72) Inventeur: BERTIN, Emmanuel, 92326 Châtillon Cedex (FR); FREY, Vincent, 92326 Châtillon Cedex (FR)
(86) Numéro de dépôt international: PCT/FR2017/052638
(87) Numéro de publication internationale: WO 2018/060629

(56) Documents cités:
- EP-A1- 2 858 298
- EP-A1- 2 858 298
- EP-B1- 2 540 051
- WO-A1-2006/079145
- WO-A1-2006/079145
- US-B1- 9 450 958

## Description

L'invention se situe dans le domaine de la délégation de droits d'une personne à un tiers.

De nombreux systèmes permettent à un utilisateur équipé d'un équipement informatique de commander la réalisation d'actions, par exemple des transactions financières, par une entité distante joignable via une liaison de communication.

Dans ces systèmes, la réalisation d'une action est effectuée après vérification de l'identité et des droits de l'utilisateur pour réaliser cette action.

Typiquement, cette vérification comprend généralement la saisie par l'utilisateur d'un identifiant et d'un mot de passe préalablement enregistrés.

Afin de renforcer la sécurité, certains systèmes demandent également à l'utilisateur de saisir un code généré par le système et transmis à l'utilisateur, via un autre réseau de communication. Ce code est par exemple transmis sous la forme d'un SMS (« Short Message Service ») reçu par le téléphone portable de l'utilisateur.

Avec l'explosion des transactions en ligne, et plus généralement des services en lignes, il peut être nécessaire pour un utilisateur de déléguer à une autre personne, la réalisation de certaines actions à réaliser.

Une première technique consiste pour l'utilisateur à transmettre ses identifiants à la personne à qui il délègue des droits d'accès afin que cette personne réalise les actions à sa place. Cependant, cette solution peut être dangereuse pour l'utilisateur car il n'a pas de contrôle sur les actions réalisées. De plus, si cette personne change le mot de passe sans communiquer le nouveau mot de passe à l'utilisateur, l'utilisateur ne peut plus réaliser lui-même les actions.

Une autre technique consiste à s'adresser à l'administrateur de chaque site pour demander la délégation de tout ou partie des droits d'accès d'un utilisateur à une personne désignée. Mais cette technique est lourde et manque de souplesse.

Un des buts de l'invention est de remédier à des insuffisances/inconvénients de l'état de la technique et/ou d'y apporter des améliorations.

A cette fin, l'invention se rapporte à un procédé de contrôle d'une action. EP 2 858 298 A1 (TENDYRON CORP [CN]) 8 avril 2015 (2015-04-08) divulgue l'utilisation d'un premier outil de signature (par exemple pour des transactions de trading, l'outil de signature du trader), demandant une autorisation a un ou plusieurs second (des approbateurs), qui affichent le montant et signent après authentification des approbateurs respectifs. Traders et approbateurs disposent d'outils de signature électronique branchés sur le port USB de leurs terminaux. Un random garantie la fraicheur de la transaction qui peut-être renvoyé si il n'est pas accepté, impliquant un timeout de la réponse.

WO 2006/079145 A1 (SALT GROUP PTY LTD [AU]; BAHARIS CHRIS [AU]; OAKLEY ROSS [AU]) 3 août 2006 (2006-08-03) divulgue la confirmation, par un terminal utilisateur, d'une transaction (par exemple bancaire ou de login) initiée, possiblement par un autre utilisateur. Le terminal reçoit les détails de la transaction par SMS avec un nonce et répond avec une signature avec sa clef privée par SMS après authentification de l'utilisateur (ou un code représentant la signature est entrée par l'utilisateur sur la page web). Le serveur vérifie que l'utilisateur a le droit d'exécuter la transaction et que le terminal est approuvé.

US 9 450 958 B1 (SAYLOR MICHAEL J [US] ET AL) 20 septembre 2016 (2016-09-20) divulgue une délégation d'action (accès logique ou physique, signature de document ou transaction financière) d'un utilisateur à l'autre. Le premier utilisateur choisit pour l'une de ses identité virtuelle, l'action à déléguer et un serveur créé une autorisation de délégation sous forme sonore, visuelle, NFC, Bluetooth ou alphanumérique. L'autorisation peut comprendre des restrictions de temps (durée ou dates) ou de localisation (coordonnées GPS, adresse ou éloignement entre les deux utilisateurs). Les autorisation peuvent être utilisées en cascade ou révoquées.

EP 2 540 051 B1 (ERICSSON TELEFON AB L M [SE]; UNIV POLITÉCNICA DE MADRID [ES]) 8 avril 2015 (2015-04-08) divulgue la délégation d'actions, ou le statut peut être programmé comme (accepter, refuser ou "demande"). Dans le dernier cas, un pop up est affiché sur le terminal de l'utilisateur ou un SMS envoyé. Un site internet peut par exemple demander a un autre site qu'un second utilisateur accède aux ressource d'un premier. Le premier utilisateur initialise les autorisations sur le premier site.

Selon l'invention, définie par les revendications indépendantes attachées, le procédé comporte les étapes suivantes, mises en œuvre par un dispositif de contrôle :
réception, en provenance d'un serveur, d'une requête d'autorisation relative à au moins une action pour laquelle un premier utilisateur possède des droits d'exécution et pour laquelle une commande a été formulée par un terminal d'un deuxième utilisateur, ladite requête contenant des données relatives à ladite action et un jeton de délégation certifiant une délégation de ladite au moins une action par le premier utilisateur au deuxième utilisateur,
analyse de ladite requête en fonction du jeton pour déterminer un premier résultat ;
détermination pour déterminer, en fonction dudit premier résultat, si un accord utilisateur doit être demandé ;
envoi, à un terminal dudit premier utilisateur, d'une demande d'accord pour l'exécution de ladite au moins une action, s'il est déterminé qu'un accord utilisateur doit être demandé;
envoi, audit serveur, d'une réponse à ladite requête d'autorisation signalant un refus ou un accord pour ladite au moins une action, ladite réponse à la requête d'autorisation étant obtenue en fonction d'une réponse à la demande d'accord si une réponse à la demande d'accord contenant un accord ou un refus est obtenue par ledit dispositif dans un délai prédéterminé ou ladite réponse à la requête d'autorisation étant ledit premier résultat dans le cas contraire.

Bien que le premier utilisateur ait délégué des droits au deuxième utilisateur, il peut grâce à la demande d'accord qu'il reçoit du dispositif de contrôle, transmettre un accord ou un refus d'exécution d'une action commandée par un utilisateur ayant reçu une délégation. Il garde ainsi un contrôle complet sur toutes les actions déléguées.

Un jeton de délégation est un ensemble de données certifiant une délégation d'une action d'un premier utilisateur vers un deuxième utilisateur. De façon connue, le jeton de délégation comporte généralement des données en clair et des donnés cryptées avec une clé de chiffrement. Ainsi, seul, un dispositif habilité à vérifier le jeton possède la clé permettant de vérifier la validité du jeton.

Selon un mode de réalisation particulier du procédé, l'étape d'analyse comporte une étape de vérification pour déterminer si un ensemble prédéfini d'au moins une règle d'utilisation dudit jeton de délégation est respecté et l'étape d'envoi d'une demande d'accord est réalisée si ledit ensemble de règles n'est pas respecté.

Un périmètre d'utilisation de la délégation est déterminé par des règles prédéfinies. L'ensemble de règles permet notamment au premier utilisateur de limiter les droits délégués. Cependant, dans le cas où les règles ne sont pas respectées, l'interrogation et l'obtention d'un accord du premier utilisateur permet au second utilisateur de commander la réalisation d'une action pour laquelle il n'a pas de délégation. Cela permet ainsi de décharger le premier utilisateur de la réalisation d'actions pour lesquelles il n'avait pas prévu de délégation.

Ceci permet la réalisation d'actions par le deuxième utilisateur dans le cas où les droits qui lui ont été délégués initialement ne lui permettent pas de réaliser cette action. Il peut ainsi exécuter des actions pour le compte du premier utilisateur lorsque le premier utilisateur ne peut effectuer lui-même ces actions, par exemple lorsque le premier utilisateur est en déplacement. Cependant, ces actions sont soumises au contrôle du premier utilisateur qui garde ainsi le contrôle de ces actions.

Selon un mode de réalisation particulier du procédé, la requête d'autorisation et la réponse à la requête d'autorisation sont transmises via un premier réseau de communication et la demande d'accord est transmise via un deuxième réseau de communication.

L'utilisation d'un deuxième réseau permet notamment de joindre le premier utilisateur lorsqu'il n'a pas accès au premier réseau, par exemple lorsqu'il est en situation de mobilité.

Selon une caractéristique particulière, la demande d'accord est envoyée sous forme d'un SMS (« Short Message Service »). Ce moyen de communication est simple à utiliser et non invasif. Le premier utilisateur peut ainsi donner son accord sans avoir de manipulations compliquées à faire.

Selon un mode de réalisation particulier du procédé, la requête d'autorisation comporte un identifiant de joignabilité du premier utilisateur utilisé pour transmettre ladite demande d'accord.

Un identifiant de joignabilité d'un utilisateur est un identifiant permettant de contacter cet utilisateur. Typiquement, un identifiant de joignabilité est un numéro de téléphone, une adresse mail...

L'identifiant de joignabilité inclus dans la requête d'autorisation permet au serveur de contrôle de joindre le premier utilisateur.

La fourniture de cet identifiant de joignabilité par le deuxième utilisateur lors de la demande d'exécution d'action permet une souplesse dans le choix du terminal du premier utilisateur. Le deuxième utilisateur peut par exemple utiliser un premier identifiant dans certaines conditions et un deuxième dans d'autres conditions. Il est ainsi possible de fournir un identifiant de joignabilité sans modifier le paramétrage du dispositif de contrôle.

Ceci permet également de renforcer la sécurité du système. En effet, la fourniture d'un identifiant de joignabilité associé à un terminal non disponible pour le premier utilisateur entraine un refus de l'exécution de l'action si les règles d'utilisation ne sont pas respectées.

Selon un mode de réalisation particulier, un identifiant de joignabilité est contenu dans le jeton de délégation ou enregistré par le dispositif de contrôle dans une mémoire accessible par ce dispositif de contrôle. Il n'est alors pas nécessaire de l'insérer dans la requête d'autorisation. Il n'est pas nécessaire pour le deuxième utilisateur de le transmettre lors de la demande d'exécution d'une action.

Selon une caractéristique particulière, au moins une règle dudit ensemble est une règle associée à un contexte d'utilisation.

Ceci permet une meilleure adaptabilité.

L'invention se rapporte encore à un dispositif de contrôle comprenant :
- un premier module de communication configuré pour recevoir, en provenance d'un serveur, une requête d'autorisation relative à au moins une action pour laquelle un premier utilisateur possède des droits d'exécution et pour laquelle une commande a été formulée par un terminal d'un deuxième utilisateur, ladite requête contenant des données relatives à ladite au moins une action et un jeton de délégation certifiant une délégation de ladite au moins une action par le premier utilisateur au deuxième utilisateur,
- un module d'analyse de ladite requête en fonction du jeton pour déterminer un premier résultat ;
- un module de détermination pour déterminer, en fonction dudit premier résultat, si un accord du premier utilisateur doit être demandé ;
- un deuxième module de communication configuré pour envoyer à un terminal dudit premier utilisateur, une demande d'accord pour l'exécution de ladite au moins une action, s'il est déterminé qu'un accord du premier utilisateur doit être demandé;
- un module de construction d'une réponse à ladite requête d'autorisation signalant un refus ou un accord pour ladite au moins une action, ladite réponse à la requête d'autorisation étant obtenue en fonction d'une réponse à la demande d'accord si une réponse à la demande d'accord contenant un accord ou un refus est obtenue par ledit dispositif dans un délai prédéterminé ou ladite réponse à la requête d'autorisation étant ledit premier résultat dans le cas contraire,
et dans lequel ledit premier module de communication est configuré pour envoyer, audit serveur, ladite réponse à ladite requête d'autorisation.

Selon une caractéristique particulière, le module d'analyse du dispositif de contrôle est configuré pour déterminer si un ensemble prédéfini d'au moins une règle d'utilisation dudit jeton de délégation est respecté.

Le dispositif de contrôle bénéficie des mêmes avantages cités précédemment que le procédé de contrôle.

L'invention se rapporte également à un produit programme d'ordinateur comprenant des instructions pour la mise en œuvre d'un procédé de contrôle tel que décrit précédemment, lorsque ce programme est exécuté par un processeur.

L'invention concerne ainsi un logiciel ou programme, susceptible d'être exécuté par un ordinateur ou par un processeur de données, ce logiciel / programme comportant des instructions pour commander l'exécution des étapes d'un procédé de contrôle. Ces instructions sont destinées à être stockées dans une mémoire d'un dispositif informatique, chargées puis exécutées par un processeur de ce dispositif informatique.

Ce logiciel / programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le dispositif informatique peut être mis en œuvre par une ou plusieurs machines physiquement distinctes et présente globalement l'architecture d'un ordinateur, incluant des constituants d'une telle architecture: mémoire(s) de données, processeur(s), bus de communication, interface(s) matérielle(s) pour la connexion de ce dispositif informatique à un réseau ou un autre équipement, interface(s) utilisateur, etc.

L'invention concerne aussi un support d'informations lisible par un processeur de données, et comportant des instructions d'un programme tel que mentionné ci-dessus. Le support d'informations peut être n'importe quelle entité ou dispositif capable de stocker le programme.

D'autres particularités et avantages de la présente invention apparaitront dans la description suivante de modes de réalisation donnés à titre d'exemple non limitatif, en référence aux dessins annexés, dans lesquels :
- la figure 1 est un schéma illustrant un système selon un premier mode de réalisation de l'invention,
- la figure 2 est un schéma représentant un serveur de contrôle apte à mettre en œuvre un procédé de contrôle selon un mode de réalisation de l'invention.
- la figure 3 est un organigramme illustrant les différentes étapes d'un procédé de contrôle selon un premier mode de réalisation de l'invention,
- la figure 4 est un schéma illustrant un système selon un deuxième mode de réalisation de l'invention,
- la figure 5 est un organigramme illustrant les différentes étapes d'un procédé de contrôle selon un deuxième mode de réalisation de l'invention.

L'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit ci-dessous pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou avec processeur intégré pour l'exécution de logiciel, par exemple un circuit intégré, une carte à puce, une carte électronique pour l'exécution d'un micrologiciel (firmware), etc.

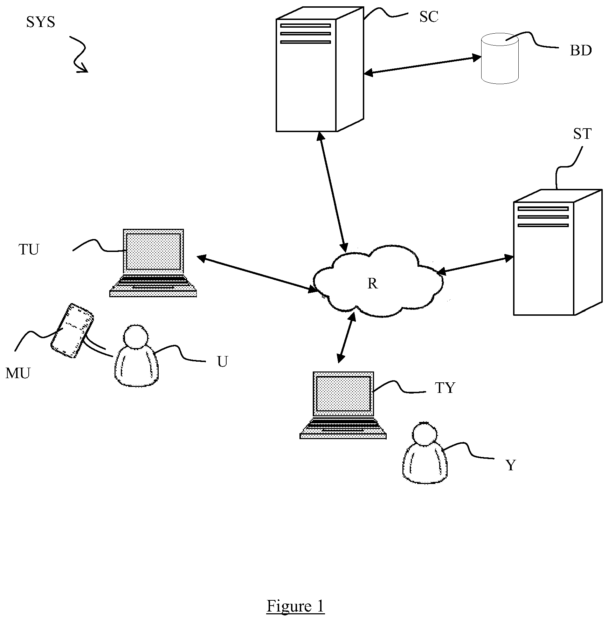

Un premier mode de réalisation d'un procédé de contrôle va maintenant être décrit en référence aux figures 1 à 3.

En référence à la **figure 1**, un système SYS comprend un serveur de contrôle SC et un serveur de traitement ST aptes à communiquer entre eux via un réseau de communication R.

Un terminal TU d'un utilisateur U est apte à se connecter au réseau de communication R et à communiquer avec un ou plusieurs serveurs via le réseau R.

Un terminal TY d'un utilisateur Y est apte à se connecter au réseau de communication R et à communiquer avec un ou plusieurs serveurs via le réseau R.

Le terminal TY est par exemple apte à se connecter au serveur de traitement ST, par exemple via un site Web.

Typiquement, les terminaux TU et TY comportent un logiciel de navigation, appelé couramment navigateur, permettant l'accès à des serveurs selon une technologie Web.

Le réseau R est le réseau Internet.

A titre d'alternative, le réseau R est un réseau Intranet, un réseau local, un réseau sans fil de type Wifi ou Bluetooth...

Le terminal TU et le terminal TY sont par exemple des ordinateurs de type PC (« Personal Computer »).

A titre d'alternative, le terminal TY et/ou le terminal TU est un téléphone mobile ou un PDA (« Personal Digital Assistant »). Plus généralement, les terminaux TY et TU sont des terminaux aptes à accéder au réseau R.

Le système SYS comporte également une base de données BD accessible par le serveur de contrôle SC, directement ou via le réseau de communication R.

Le serveur de contrôle SC représente un exemple de dispositif de contrôle au sens de l'invention.

A titre d'alternative, le dispositif de contrôle est intégré dans le serveur de contrôle SC. En d'autres termes, le dispositif de contrôle est alors un module du serveur de contrôle SC.

Comme illustré sur la figure 1, l'utilisateur U possède également un terminal mobile MU associé à l'utilisateur U.

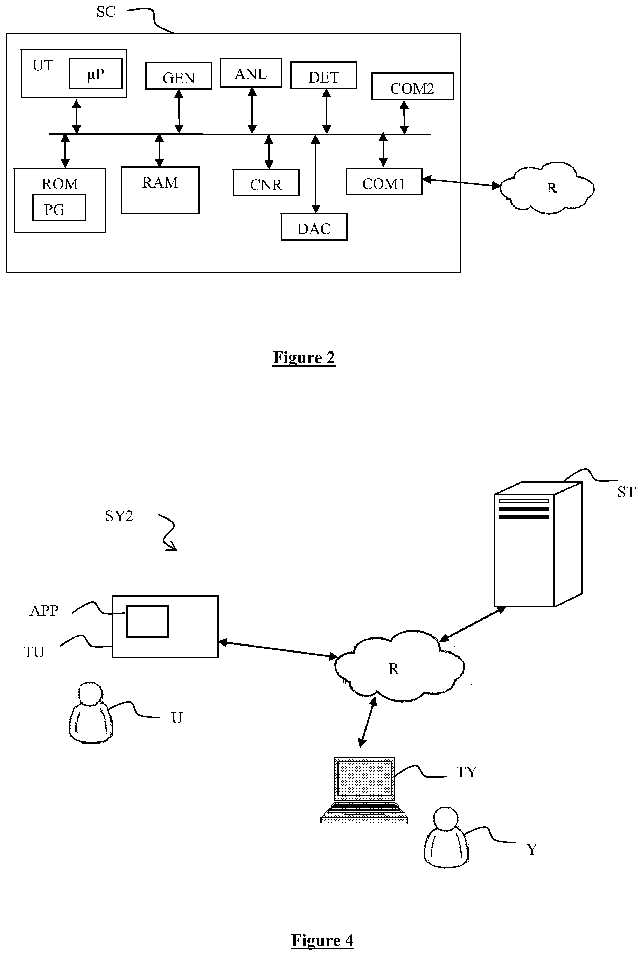

En référence à la **figure 2**, le serveur de contrôle SC comporte de façon connue, notamment une unité de traitement UT équipée d'un microprocesseur, une mémoire morte de type ROM, une mémoire vive de type RAM.

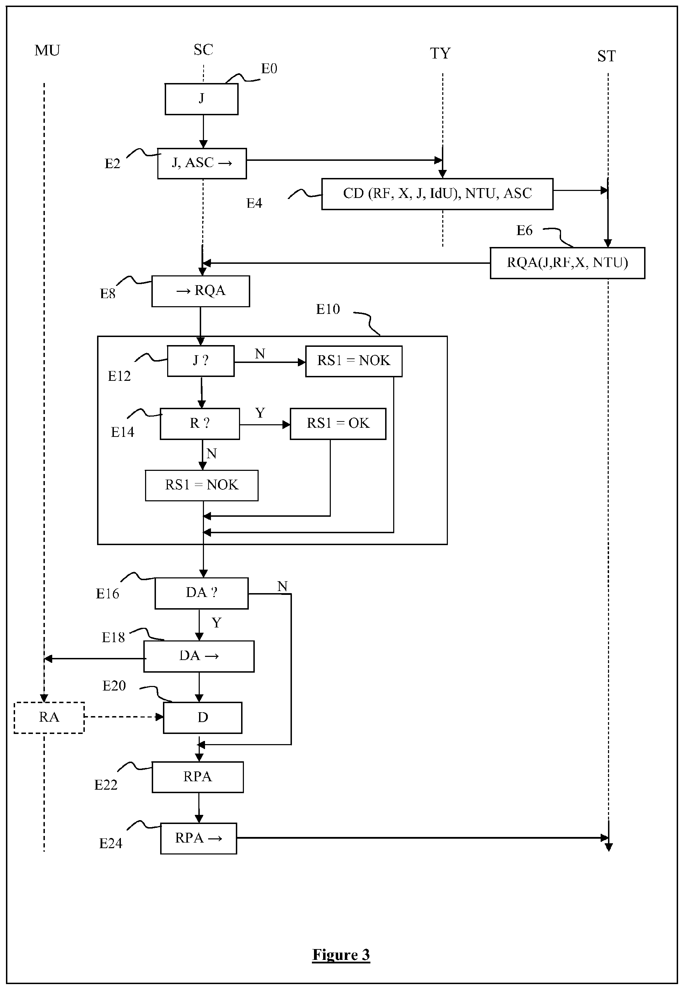

La mémoire morte de type ROM comporte des registres mémorisant un programme d'ordinateur PG comportant des instructions de programme adaptées à mettre en œuvre un procédé de contrôle selon un mode de réalisation de l'invention décrit ultérieurement en référence à la figure 3.

Le serveur de contrôle SC comporte également un premier module de communication COM1, un module de génération GEN, un module d'analyse ANL, un module de détermination DET, un module de demande d'accord DAC, un module de construction de réponse CNR et un deuxième module de communication COM2.

Le premier module de communication COM1 est configuré pour communiquer via le réseau R. Le premier module de communication COM1est ainsi configuré pour communiquer avec le serveur de traitement ST.

Le deuxième module de communication COM2 est configuré pour communiquer via un deuxième réseau. Le deuxième module de communication COM2 est par exemple configuré pour transmettre et recevoir des SMS (pour « Short Message Service ») à destination ou en provenance de terminaux, par exemple du terminal mobile MU de l'utilisateur U.

Dans ce mode de réalisation, le deuxième réseau est différent du réseau R.

A titre d'alternative, le deuxième réseau est le réseau R.

Un mode de réalisation d'un procédé de contrôle, mis en œuvre dans le système SYS, va maintenant être décrit en référence à la **figure 3**.

Dans le mode de réalisation décrit, le serveur de traitement ST est un serveur de vente en ligne auprès duquel l'utilisateur U s'est enregistré et possède ainsi des droits DR.

Les droits DR sont par exemple un couple login/password, un identifiant, une référence de compte bancaire...

Aucune limitation n'est attachée au type de droits acquis par l'utilisateur U.

Lors d'une étape préalable E0, le module de génération GEN du serveur de contrôle SC génère un jeton de délégation J.

La génération du jeton de délégation J par le serveur de contrôle SC est déclenchée suite à la réception par le serveur de contrôle SC d'une demande de délégation DD émise par l'utilisateur U, par exemple via son terminal TU.

La demande de délégation DD comporte des données permettant de définir les droits DR, c'est-à-dire le ou les actions déléguées par l'utilisateur U.

La demande de délégation DD comporte des données permettant d'identifier un deuxième utilisateur, par exemple l'utilisateur Y, auquel l'utilisateur U veut déléguer les droits DR. Les données permettant d'identifier l'utilisateur Y sont typiquement un identifiant de l'utilisateur Y tel que par exemple un couple nom/prénom, un identifiant d'entreprise...

La demande de délégation DD comporte également un ensemble E d'au moins une règle d'utilisation.

Par exemple, l'ensemble E comprend une règle d'utilisation R1 et la règle d'utilisation R1 est par exemple « le montant d'une commande effectuée par l'utilisateur Y pour le compte de l'utilisateur U doit être inférieur à 20 Euros ».

L'ensemble E définit le périmètre dans lequel l'utilisateur U autorise l'utilisateur Y à effectuer des actions pour son compte, par exemple des transactions.

A titre d'alternative, la demande de délégation DD ne comprend pas d'ensemble E. Dans ce cas, aucune règle n'est associée à la délégation.

Le jeton de délégation J contient un identifiant IdU de l'utilisateur U et un identifiant IdY de l'utilisateur Y.

L'identifiant IdU de l'utilisateur U, respectivement l'identifiant IdY de l'utilisateur Y, est par exemple le nom de l'utilisateur, un identifiant attribué à l'utilisateur, par exemple au sein d'une entreprise dans laquelle il travaille, un numéro de sécurité sociale...

Le jeton de délégation J contient également l'ensemble E ou un identifiant de l'ensemble E.

A titre d'alternative, l'ensemble E n'est pas contenu dans le jeton J et sont enregistrées par le serveur de contrôle SC dans la base de données BD en association avec le jeton de délégation J.

A titre d'alternative, l'ensemble E sont enregistrées dans une mémoire interne du serveur de contrôle SC.

A titre d'alternative, le jeton de délégation J contient également des données M permettant de contacter l'utilisateur U.

Les données M sont par exemple un numéro MSISDN (pour 'Mobile Station International Subscriber Directory Number'), par exemple le numéro MSISDN d'un terminal MU de l'utilisateur U, un numéro de téléphone, une adresse de courrier électronique...

La génération d'un jeton de délégation est une technique connue de l'homme du métier et n'est pas détaillée ici.

Lors d'une étape E2, le serveur de contrôle SC transmet au deuxième utilisateur Y, le jeton de délégation J ainsi que des données de contacts ASC du serveur de contrôle SC.

Les données de contact ASC sont des données permettant de contacter le serveur de contrôle SC. Les données de contact ASC sont typiquement une adresse du serveur de contrôle SC, par exemple une adresse IP ('Internet Protocol').

Le serveur de contrôle SC transmet par exemple le jeton de délégation J et les données de contact ASC via le réseau de communication R, un SMS, une messagerie électronique...

A titre d'alternative, le jeton de délégation J et les données de contact ASC sont transmises à l'utilisateur U à l'origine de la demande de délégation et l'utilisateur U se charge de transmettre ces données à l'utilisateur Y.

Aucune limitation n'est apportée ni à la transmission du jeton de délégation J, ni à la transmission des données de contact ASC du serveur de contrôle SC à l'utilisateur Y.

Ultérieurement, lors d'une étape E4, l'utilisateur Y établit une liaison de communication via le réseau R entre le terminal TY et le serveur de traitement ST puis commande une action pour le compte de l'utilisateur U.

Plus précisément, le terminal TY envoie une commande CD pour la réalisation d'une action A1. L'action A1 est par exemple l'achat d'un objet et la commande CD contient un numéro de référence RF de l'objet et un prix X.

Le terminal TY envoie également au serveur de traitement ST, un numéro de téléphone NTU de l'utilisateur U, par exemple le numéro de téléphone associé au terminal mobile MU.

Le numéro de téléphone NTU est par exemple saisi par l'utilisateur Y au moyen d'une interface graphique affichée sur un écran du terminal TY.

Le numéro de téléphone NTU représente un identifiant de joignabilité au sens de l'invention.

Le terminal TY envoie également au serveur de traitement ST, des données indiquant que la commande CD est réalisée pour le compte de l'utilisateur U, typiquement un identifiant de l'utilisateur U.

A titre d'alternative, un identifiant de l'utilisateur U étant contenue dans le jeton J, le terminal TY n'indique pas que la commande CD est pour le compte de l'utilisateur U.

Le terminal TY transmet également au serveur de traitement ST, le jeton de délégation J et les données de contact ASC du serveur de contrôle SC.

L'étape E4 est suivie d'une étape E6 lors de laquelle le serveur de traitement ST ayant reçu les données transmises par le terminal TY lors de l'étape E4, transmet au serveur de contrôle SC, en utilisant les données de contact ASC, une requête d'autorisation RQA contenant le jeton J et tout ou partie de la commande CD.

Dans le mode de réalisation décrit ici, la requête RQA contient le jeton J, le numéro de référence RF, le prix X et l'identifiant de joignabilité NTU.

La requête d'autorisation RQA est reçue par le premier module de communication COM1 du serveur de contrôle SC lors d'une étape E8.

L'étape E8 est suivie d'une étape E10 lors de laquelle le module d'analyse ANL du serveur de contrôle SC analyse la requête RQA et détermine en fonction des données reçues dans la requête RQA et notamment du jeton J, un premier résultat RS1.

Dans le mode de réalisation décrit, l'étape E10 comprend deux sous étapes E12 et E14.

Lors de la sous étape E12, le module d'analyse ANL du serveur de contrôle SC vérifie si le jeton de délégation J est un jeton valide.

Dans le cas où le jeton de délégation J n'est pas valide, par exemple un jeton de délégation non généré par le serveur de contrôle SC, le premier résultat RS1 est « refus » ou « jeton non valide » ou « NOK ».

Dans le cas où le jeton J est valide, la sous étape E12 est suivie de la sous étape E14 lors de laquelle le module d'analyse ANL du serveur de contrôle SC détermine si les règles de l'ensemble E sont respectées.

Ainsi, dans l'exemple de réalisation décrit, lors de la sous étape E14, le serveur de contrôle SC vérifie que le prix X est inférieur à 20 Euros.

Dans le cas où l'ensemble E de règles est respecté, le premier résultat RS1 est « accord » ou « OK ». Dans le cas contraire, le premier résultat RS1 est « refus » ou « NOK ».

L'étape E10 est suivie d'une étape E16 lors de laquelle le module de détermination DET du serveur de contrôle SC détermine si un accord de l'utilisateur U doit être demandé.

Dans le mode de réalisation décrit, cet accord est demandé si l'ensemble E des règles n'est pas respecté, par exemple si le prix X est supérieur à 20 Euros.

En alternative, un accord est systématiquement demandé si le jeton J est un jeton valide.

Egalement, en alternative, l'accord est demandé si, d'une part, l'ensemble E de règles n'est pas respecté et si, d'autre part, une règle supplémentaire, enregistrée par exemple dans une mémoire du serveur de contrôle SC ou de la base de données BD, est respectée. Par exemple, l'accord est demandé si le prix est supérieur à 20€ mais inférieur à 30 €.

S'il est déterminé qu'un accord utilisateur doit être demandé, l'étape E16 est suivie d'une étape E18 lors de laquelle le module de demande d'accord DAC du serveur de contrôle SC envoie à destination de l'utilisateur U, via le deuxième module de communication COM2, une demande d'accord DA pour l'exécution de l'action A1, en utilisant le numéro de téléphone NTU contenu dans la requête RQA.

La demande d'accord DA est par exemple un SMS et contient par exemple le texte : « l'utilisateur Y a demandé l'exécution d'une commande d'un objet de référence RF pour un montant de 22 €. Etes vous d' accord pour cette commande ? ».

A titre d'alternative, cette demande d'accord DA est transmise par un autre moyen de communication, par exemple un mail, un message vocal...

L'étape E18 est suivie d'une étape E20 pendant laquelle le serveur de contrôle SC attend une réponse à la demande d'accord DA pendant un délai maximum D prédéfini.

Suite à la réception d'une réponse RA à la demande d'accord DA ou à la fin du délai prédéfini D, le module de construction de réponses CNR du serveur de contrôle SC construit une réponse RPA à la requête d'autorisation RQA (étape E22).

La réponse RPA signale un accord ou un refus pour l'exécution de la commande CD.

La réponse RPA est déterminée à partir de la réponse RA de l'utilisateur U à la demande d'accord DA. La réponse RA à la demande d'accord DA est formulée par l'utilisateur U et transmise au serveur de contrôle SC par le terminal MU sous la forme par exemple d'un SMS. Elle est reçue par le serveur de contrôle SC via le deuxième module de communication COM2.

S'il est déterminé que la réponse RA à la demande d'accord DA est un accord ou un refus pour l'action A1, la réponse RPA à la requête d'autorisation RQA signale ledit accord ou ledit refus.

Si aucune réponse n'est reçue dans le délai prédéfini D ou si la réponse RA reçue du terminal MU ne comporte ni accord, ni refus, la réponse RPA contient le premier résultat déterminé RS1

S'il est déterminé lors de l'étape E16 qu'un accord utilisateur ne doit pas être demandé, la réponse RPA contient le premier résultat RS1 déterminé lors de l'étape E10.

L'étape E22 est suivie d'une étape E24 lors de laquelle le premier module de communication COM1 du serveur de contrôle SC envoie, à destination du serveur de traitement ST, la réponse RPA.

Le serveur de traitement ST continue alors le traitement de la commande CD en fonction de la réponse RPA reçue.

Les étapes E0, E2, E8, E10, E16, E18, E20, E22 et E24 mises en œuvre par le serveur de contrôle SC, représentent des étapes d'un procédé de contrôle.

Dans le mode réalisation décrit, l'action A1 est une commande en ligne.

L'invention s'applique également à d'autres types d'actions. Par exemple, l'action est une validation d'une demande de congés auprès d'un serveur de gestion des congés. Par exemple, l'utilisateur Y est autorisé par l'utilisateur U à valider les congés demandés dès lors que les congés demandés au cours du mois en cours ne dépassent pas quinze jours. Si les congés demandés au cours du mois en cours dépassent quinze jours, une demande d'accord est transmise à l'utilisateur U.

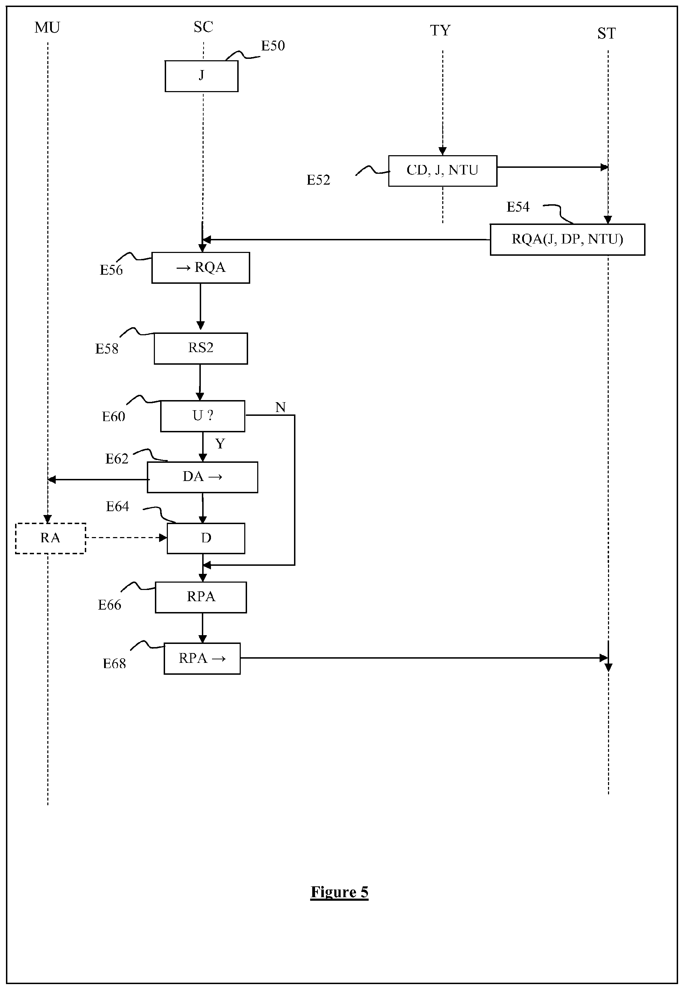

Un deuxième mode de réalisation d'un procédé de contrôle va maintenant être décrit en référence aux figures 4 et 5.

En référence à la **figure 4**, un système SY2 comprend un serveur de traitement ST, un terminal TU d'un premier utilisateur U et un terminal TY d'un deuxième utilisateur Y aptes à communiquer entre eux via un réseau de communication R.

Le terminal TU et le terminal TY sont aptes à se connecter au réseau de communication R et à communiquer d'une part entre eux et d'autre part avec un ou plusieurs serveurs via le réseau R.

Le réseau R est par exemple le réseau Internet.

Le terminal TU et le terminal TY sont par exemple des ordinateurs de type PC (« Personal Computer »).

A titre d'alternative, le terminal TY et/ou le terminal TU est un téléphone mobile ou un PDA (« Personal Digital Assistant »).

Une application APP a été préalablement chargée dans le terminal TU.

L'application APP représente un exemple de dispositif de contrôle au sens de l'invention.

Un mode de réalisation d'un procédé de contrôle, mis en œuvre dans le système SY2, va maintenant être décrit en référence à la **figure 5**.

Dans le mode de réalisation décrit, le serveur de traitement ST est un serveur de gestion des déplacements des employés d'une entreprise auprès duquel l'utilisateur U s'est enregistré et possède ainsi des droits de validation des déplacements d'une liste d'employés prédéfinie, par exemple les employés de son équipe.

Lors d'une étape préalable E50, l'utilisateur U, au moyen d'une interface de l'application APP installée sur le terminal TU, demande à ce que l'utilisateur Y puisse valider les déplacements en France des membres de son équipe.

Suite à la réception de cette demande, l'application APP génère un jeton de délégation J. Le jeton J certifie que l'utilisateur Y possède des droits de délégation donnés par l'utilisateur U pour la gestion des déplacements des employés de l'équipe de A.

L'application APP enregistre également dans une mémoire du terminal TU de l'utilisateur U, une règle R2 : « la destination du déplacement doit être en France ».

L'application APP enregistre en association avec la règle R2, un identifiant de l'utilisateur U, un identifiant de l'utilisateur Y et le jeton J.

L'application APP communique le jeton J à l'utilisateur U qui le retransmet à l'utilisateur Y.

Aucune limitation n'est attachée à la façon dont le jeton est transmis à l'utilisateur U.

Lors d'une étape E52, l'utilisateur Y établit une liaison de communication via le réseau R entre le terminal TY et le serveur de traitement ST et commande une validation d'un déplacement en Allemagne d'un employé de l'équipe de l'utilisateur U.

Plus précisément, le terminal TY envoie une commande de validation CD. La validation du déplacement représente une action, référencée A2, au sens de l'invention.

Le terminal TY transmet également au serveur de traitement ST, le jeton de délégation J et un numéro de téléphone mobile NTU de l'utilisateur U.

L'étape E52 est suivie d'une étape E54 lors de laquelle le serveur de traitement ST ayant reçues les données transmises par le terminal TY lors de l'étape E52, transmet à l'application APP une requête d'autorisation RQA contenant le jeton J, le numéro de téléphone NTU et des données DP relatives à la commande CD.

Dans le mode de réalisation décrit ici, les données DP relatives à la commande contenues dans la requête RQA sont un identifiant IdZ de l'employé Z souhaitant se déplacer, par exemple son nom, et la destination du déplacement.

La requête d'autorisation RQA est reçue par l'application APP lors d'une étape E56.

L'étape E56 est suivie d'une étape E58 lors de laquelle l'application APP analyse la requête RQA reçue.

Notamment, l'application APP retrouve dans sa mémoire le jeton J et les données enregistrées en association avec le jeton J et utilise ces données pour vérifier la validité du jeton J et pour vérifier si la règle R2 est respectée

L'application APP détermine ainsi un premier résultat RS2 signalant un refus car la règle R2 n'est pas respectée.

Lors d'une étape E60, l'application APP détermine que la règle R2 n'étant pas respectée, un accord de l'utilisateur U doit être demandé.

L'étape E60 est suivie d'une étape E62 lors de laquelle l'application APP transmet à l'utilisateur U en utilisant le numéro de téléphone NTU contenu dans la requête d'autorisation RQA, une demande d'accord DA pour l'exécution de l'action A2.

La demande d'accord DA est par exemple un SMS et contient par exemple le texte : « Etes vous d'accord pour que l'utilisateur Y valide un déplacement en Allemagne de l'employé Z ? ».

L'étape E62 est suivie d'une étape E64 pendant laquelle l'application APP attend une réponse à la demande d'accord DA pendant un délai maximum prédéfini D.

Suite à la réception d'une réponse RA à la demande d'accord DA ou à la fin du délai prédéfini D, l'application APP construit une réponse RPA à la requête d'autorisation RQA (étape E66)

La réponse RPA signale un accord ou un refus pour l'exécution de l'action A2.

La réponse RPA est déterminée à partir de la réponse de l'utilisateur U à la demande d'accord DA.

Si une réponse RA à la demande d'accord DA est reçue par l'application APP et qu'il est déterminé que la réponse RA contient un accord ou un refus pour l'action A2, la réponse RPA à la requête d'autorisation RQA est déterminée à partir de la réponse RA et la réponse RPA à la requête d'autorisation RQA signale ledit accord ou ledit refus.

Si aucune réponse n'est reçue dans le délai prédéfini, la réponse RPA contient le premier résultat RS2 déterminé lors de l'étape d'analyse E56.

Si une réponse RA à la demande d'accord DA est reçue par l'application APP mais que l'application ne peut déterminer si la réponse RA contient un accord ou un refus pour l'action A2, la réponse RPA contient le premier résultat RS2 déterminé.

L'étape E66 est suivie d'une étape E68 lors de laquelle le serveur de contrôle SC envoie la réponse RPA à destination du serveur de traitement ST.

Dans les modes de réalisation décrit, le jeton délégation est transmis à un terminal d'un utilisateur.

A titre d'alternative, le jeton de délégation J est transmis à un objet connecté apte à commander la réalisation d'une action.

Un tel objet connecté est par exemple un objet installé dans un réfrigérateur et configuré pour établir une liste de courses en fonction des produits stockés dans ce frigidaire. Une action est par exemple une demande d'achat. La demande d'achat est par exemple formulée par l'objet connecté périodiquement ou déclenchée lorsque les étagères du réfrigérateur sont presque vides.

Dans les modes de réalisation décrit, l'identifiant de joignabilité est transmis par le terminal TY au serveur de traitement ST et inséré par ce serveur de traitement dans la requête d'autorisation RQA.

A titre d'alternative, l'identifiant de joignabilité est contenu dans le jeton de délégation J ou enregistré par le dispositif de contrôle dans une mémoire accessible par ce dispositif de contrôle.

Aucune limitation n'est attachée au type de règles. Selon une mode de réalisation, une ou plusieurs règles sont définies pour un contexte d'utilisation.

A titre d'exemple, une première règle peut limiter le nombre d'actions effectuées par un objet connecté de type réfrigérateur à une commande par semaine si la température extérieure moyenne est inférieure à 25°C et permettre un nombre de commandes supérieur si la température extérieure moyenne est supérieure à 25°C.

A titre de deuxième exemple, le contexte d'utilisation associé à une règle peut être lié à l'emplacement du deuxième utilisateur. Dans ce cas, le serveur de contrôle comporte des moyens d'obtention d'une information de localisation du deuxième utilisateur. La requête d'autorisation comporte par exemple une information sur la localisation du deuxième utilisateur ou le serveur de contrôle comporte des moyens pour interroger un dispositif apte à fournir cette information de localisation.

## Revendications

1. procédé de contrôle d'au moins une action (A1, A2) **caractérisé en ce qu'**il comporte les étapes suivantes mises en œuvre par un dispositif de contrôle (SC, APP) :
génération d'un jeton de délégation (J) suite à la réception d'une demande de délégation (DD) émise par un premier utilisateur (U) ;
réception (E8), en provenance d'un serveur (ST), d'une requête d'autorisation (RQA) relative à au moins une action (A1, A2) pour laquelle ledit premier utilisateur (U) possède des droits d'exécution, ladite requête contenant des données (X) relatives à ladite au moins une action et ledit jeton de délégation (J) certifiant une délégation de ladite au moins une action par ledit premier utilisateur à un deuxième utilisateur ;
analyse (E10, E58) de ladite requête (RQA) en fonction dudit jeton reçu (J) pour déterminer un premier résultat (RS1, RS2);
envoi (E18, E62), à un terminal (MU) dudit premier utilisateur, d'une demande d'accord (DA) pour l'exécution de ladite au moins une action, s'il est déterminé (E16, E60) en fonction dudit premier résultat qu'un accord du premier utilisateur doit être demandé;
envoi (E24, E68), audit serveur (ST), d'une réponse (RPA) à ladite requête d'autorisation signalant un refus ou un accord pour ladite au moins une action, ladite réponse à la requête d'autorisation étant obtenue :
- en fonction d'une réponse (RA) à la demande d'accord (DA) si une réponse à la demande d'accord est obtenue par ledit dispositif dans un délai prédéterminé ou
- en fonction dudit premier résultat dans le cas contraire.

2. Procédé selon la revendication 1 **caractérisé en ce que** l'étape d'analyse comporte une étape de vérification pour déterminer si un ensemble prédéfini (E) d'au moins une règle d'utilisation (R1, R2) dudit jeton de délégation est respecté et dans lequel l'étape d'envoi d'une demande d'accord est réalisée si ledit ensemble de règles n'est pas respecté.

3. Procédé selon la revendication 1 dans lequel la requête d'autorisation et la réponse à la requête d'autorisation sont transmises via un premier réseau de communication et dans lequel la demande d'accord est transmise via un deuxième réseau de communication.

4. Procédé selon la revendication 1 dans lequel ladite requête d'autorisation comporte un identifiant de joignabilité (NTU) du premier utilisateur utilisé pour transmettre ladite demande d'accord.

5. Procédé selon la revendication 1 dans lequel ladite demande d'accord est transmise sous la forme d'un message de type SMS (« Short Message Service »).

6. Dispositif de contrôle (SC, APP) **caractérisé en ce qu'**il comprend :
- un module (GEN) configuré pour générer un jeton de délégation (J) suite à la réception d'une demande de délégation (DD) émise par un premier utilisateur (U) ;
- un premier module de communication (COM1) configuré pour recevoir, en provenance d'un serveur (ST), une requête d'autorisation (RQA) relative à au moins une action pour laquelle un premier utilisateur (U) possède des droits d'exécution, ladite requête contenant des données relatives à ladite au moins une action et un jeton de délégation (J) certifiant une délégation de ladite au moins une action par le premier utilisateur à un deuxième utilisateur ;
- un module d'analyse (ANL) de ladite requête en fonction du jeton reçu pour déterminer un premier résultat (RS1, RS2);
- un deuxième module de communication (COM2) configuré pour envoyer à un terminal dudit premier utilisateur, une demande d'accord pour l'exécution de ladite au moins une action, s'il est déterminé en fonction dudit premier résultat qu'un accord du premier utilisateur doit être demandé;
- un module de construction (CNR) d'une réponse à ladite requête d'autorisation signalant un refus ou un accord pour ladite au moins une action, ladite réponse à la requête d'autorisation étant obtenue :
- en fonction d'une réponse (RA) à la demande d'accord (DA) si une réponse à la demande d'accord est obtenue par ledit dispositif dans un délai prédéterminé ou
- en fonction dudit premier résultat dans le cas contraire
et dans lequel ledit premier module de communication (COM1) est configuré pour envoyer, audit serveur, ladite réponse à ladite requête d'autorisation.

7. Dispositif selon la revendication 6 dans lequel le module d'analyse est configuré pour déterminer si un ensemble prédéfini d'au moins une règle d'utilisation dudit jeton de délégation est respecté.

8. Programme d'ordinateur comprenant des instructions de code de programme pour l'exécution des étapes d'un procédé de contrôle selon l'une des revendications 1 à 5, lorsque ledit programme est exécuté sur un ordinateur.

9. Support d'enregistrement lisible par ordinateur sur lequel est enregistré un programme d'ordinateur comportant des instructions de code de programme pour l'exécution des étapes d'un procédé de contrôle selon l'une des revendications 1 à *5.*

## Patentansprüche

1. Verfahren zur Steuerung mindestens einer Aktion (A1, A2), **dadurch gekennzeichnet, dass** es die folgenden, von einer Steuerungsvorrichtung (SC, APP) durchgeführten Schritte umfasst:
Erzeugen eines Delegierungstokens (J) nach dem Empfangen einer Delegationsanforderung (DD), die von einem ersten Benutzer (U) gesendet wird;
Empfangen (E8), von einem Server (ST), einer Autorisierungsanfrage (RQA) bezüglich mindestens einer Aktion (A1, A2), für die der erste Benutzer (U) Ausführungsrechte besitzt, wobei die Anfrage Daten (X) bezüglich der mindestens einen Aktion enthält und das Delegierungstoken (J) eine Delegierung der mindestens einen Aktion durch den ersten Benutzer an einen zweiten Benutzer bescheinigt;
Analysieren (E10, E58) der Anfrage (RQA) in Abhängigkeit von dem empfangenen Token (J), um ein erstes Ergebnis (RS1, RS2) zu ermitteln;
Senden (E18, E62), an ein Endgerät (MU) des ersten Benutzers, einer Genehmigungsanforderung (DA) für die Ausführung der mindestens einen Aktion, wenn in Abhängigkeit von dem ersten Ergebnis ermittelt wird (E16, E60), dass eine Genehmigung des ersten Benutzers angefordert werden muss;
Senden (E24, E68), an den Server (ST), einer Antwort (RPA) auf die Autorisierungsanfrage, die eine Ablehnung oder eine Genehmigung für die mindestens eine Aktion signalisiert, wobei die Antwort auf die Autorisierungsanfrage erhalten wird:
- in Abhängigkeit von einer Antwort (RA) auf die Genehmigungsanforderung (DA), wenn eine Antwort auf die Genehmigungsanforderung von der Vorrichtung innerhalb einer vorbestimmten Frist erhalten wird, oder
- in Abhängigkeit von dem ersten Ergebnis im gegenteiligen Fall.

2. Verfahren nach Anspruch 1, **dadurch gekennzeichnet, dass** der Schritt des Analysierens einen Schritt des Überprüfens umfasst, um zu ermitteln, ob ein vorgegebener Satz (E) aus mindestens einer Verwendungsregel (R1, R2) des Delegierungstokens erfüllt ist, und wobei der Schritt des Sendens einer Genehmigungsanforderung ausgeführt wird, wenn der Satz von Regeln nicht erfüllt ist.

3. Verfahren nach Anspruch 1, wobei die Autorisierungsanfrage und die Antwort auf die Autorisierungsanfrage über ein erstes Kommunikationsnetz übertragen werden und wobei die Genehmigungsanforderung über ein zweites Kommunikationsnetz übertragen wird.

4. Verfahren nach Anspruch 1, wobei die Autorisierungsanfrage eine Erreichbarkeitskennung (NTU) des ersten Benutzers umfasst, die zum Übertragen der Genehmigungsanforderung verwendet wird.

5. Verfahren nach Anspruch 1, wobei die Genehmigungsanforderung in Form einer Nachricht vom Typ SMS ("Short Message Service") übertragen wird.

6. Vorrichtung zur Steuerung (SC, APP), **dadurch gekennzeichnet, dass** sie umfasst:
- ein Modul (GEN), das dazu ausgestaltet ist, ein Delegierungstoken (J) nach dem Empfangen einer von einem ersten Benutzer (U) gesendeten Delegierungsanfrage (DD) zu erzeugen;
- ein erstes Kommunikationsmodul (COM1), das dazu ausgestaltet ist, von einem Server (ST), eine Autorisierungsanfrage (RQA) bezüglich mindestens einer Aktion zu empfangen, für die der erste Benutzer (U) Ausführungsrechte besitzt, wobei die Anfrage Daten (X) bezüglich der mindestens einen Aktion enthält und wobei das Delegierungstoken (J) eine Delegierung der mindestens einen Aktion durch den ersten Benutzer an einen zweiten Benutzer bescheinigt;
- ein Analysemodul (ANL) zum Analysieren der Anfrage in Abhängigkeit von dem empfangenen Token, um ein erstes Ergebnis (RS1, RS2) zu ermitteln;
- ein zweites Kommunikationsmodul (COM2), das dazu ausgestaltet ist, an ein Endgerät des ersten Benutzers eine Genehmigungsanforderung für die Ausführung der mindestens einen Aktion zu senden, wenn in Abhängigkeit von dem ersten Ergebnis ermittelt wird, dass eine Genehmigung des ersten Benutzers angefordert werden muss;
- ein Modul zum Erstellen (CNR) einer Antwort auf die Autorisierungsanfrage, die eine Ablehnung oder eine Genehmigung für die mindestens eine Aktion signalisiert, wobei die Antwort auf die Autorisierungsanfrage erhalten wird:
- in Abhängigkeit von einer Antwort (RA) auf die Genehmigungsanforderung (DA), wenn eine Antwort auf die Genehmigungsanforderung von der Vorrichtung innerhalb einer vorbestimmten Frist erhalten wird, oder
- in Abhängigkeit von dem ersten Ergebnis im gegenteiligen Fall
und wobei das erste Kommunikationsmodul (COM1) dazu ausgestaltet ist, an den Server die Antwort auf die Autorisierungsanfrage zu senden.

7. Vorrichtung nach Anspruch 6, wobei das Analysemodul dazu ausgestaltet ist zu ermitteln, ob ein vorgegebener Satz aus mindestens einer Verwendungsregel des Delegierungstokens erfüllt ist.

8. Computerprogramm, das Programmcodeanweisungen umfasst, die bei der Ausführung des Programms auf einem Computer die Schritte eines Verfahrens zur Steuerung nach einem der Ansprüche 1 bis 5 ausführen.

9. Computerlesbares Speichermedium, auf dem ein Computerprogramm gespeichert ist, das Programmcodeanweisungen zur Ausführung der Schritte eines Verfahrens zur Steuerung nach einem der Ansprüche 1 bis 5 umfasst.

## Claims

1. Method for controlling at least one action (A1, A2), **characterized in that** it includes the following steps, implemented by a control device (SC, APP):
generating a delegation token (J) following the receipt of a delegation request (DD) made by a first user (U);
receiving (E8), from a server (ST), an authorization request (RQA) in relation to at least one action (A1, A2) for which said first user (U) has execution rights, said request containing data (X) in relation to said at least one action and said delegation token (J) certifying delegation of said at least one action by said first user to a second user;
analyzing (E10, E58) said request (RQA) on the basis of said received token (J) so as to determine a first result (RS1, RS2);
sending (E18, E62), to a terminal (MU) of said first user, a consent request (DA) for the execution of said at least one action, if it is determined (E16, E60), on the basis of said first result, that consent of the first user should be requested;
sending (E24, E68), to said server (ST), a response (RPA) to said authorization request signalling denial or consent for said at least one action, said response to the authorization request being obtained:
- on the basis of a response (RA) to the consent request (DA) if a response to the consent request is obtained by said device within a predetermined period or
- on the basis of said first result if not.

2. Method according to Claim 1, **characterized in that** the analysis step includes a verification step for determining whether a predefined set (E) of at least one usage rule (R1, R2) for said delegation token is complied with, and wherein the step of sending a consent request is performed if said set of rules is not complied with.

3. Method according to Claim 1, wherein the authorization request and the response to the authorization request are transmitted via a first communication network and wherein the consent request is transmitted via a second communication network.

4. Method according to Claim 1, wherein said authorization request includes a reachability identifier (NTU) of the first user used to transmit said consent request.

5. Method according to Claim 1, wherein said consent request is transmitted in the form of an SMS ("short message service") message.

6. Control device (SC, APP), **characterized in that** it comprises:
- a module (GEN) configured to generate a delegation token (J) following the receipt of a delegation request (DD) made by a first user (U);
- a first communication module (COM1) configured to receive, from a server (ST), an authorization request (RQA) in relation to at least one action for which a first user (U) has execution rights, said request containing data in relation to said at least one action and a delegation token (J) certifying delegation of said at least one action by the first user to a second user;
- a module (ANL) for analysing said request on the basis of the received token so as to determine a first result (RS1, RS2);
- a second communication module (COM2) configured to send, to a terminal of said first user, a consent request for the execution of said at least one action, if it is determined, on the basis of said first result, that consent of the first user should be requested;
- a module (CNR) for constructing a response to said authorization request signalling denial or consent for said at least one action, said response to the authorization request being obtained:
- on the basis of a response (RA) to the consent request (DA) if a response to the consent request is obtained by said device within a predetermined period or
- on the basis of said first result if not,
and wherein said first communication module (COM1) is configured to send, to said server, said response to said authorization request.

7. Device according to Claim 6, wherein the analysis module is configured to determine whether a predefined set of at least one usage rule for said delegation token is complied with.

8. Computer program comprising program code instructions for executing the steps of a control method according to one of Claims 1 to 5 when said program is executed on a computer.

9. Computer-readable recording medium on which there is recorded a computer program including program code instructions for executing the steps of a control method according to one of Claims 1 to 5.
